# EUROPÄISCHE PATENTSCHRIFT

(11) **EP 0 543 870 B1**
(45) Veröffentlichungstag und Bekanntmachung des Hinweises auf die Patenterteilung: **27.07.1994**
(21) Anmeldenummer: 91914503.7
(22) Anmeldetag: 16.08.1991
(51) Int. Cl.: G01N 29/04, G01N 29/10

(54) **ULTRASCHALLPRÜFVORRICHTUNG**
U/S TEST DEVICE
DISPOSITIF D'ESSAI PAR ULTRASONS

(30) Priorität: 17.08.1990 DE 4026458; 13.08.1991 DE 9110160 U
(43) Veröffentlichungstag der Anmeldung: 02.06.1993
(73) Patentinhaber: MANNESMANN Aktiengesellschaft, 40027 Düsseldorf (DE); KRAUTKRÄMER GmbH & Co., D-50354 Hürth (DE)
(72) Erfinder: SCHOENEN, Manfried, D-4020 Mettmann (DE); HAACKE, Harri, D-4030 Ratingen-Vokarday (DE); BÄTHMANN, Hans-Joachim, D-4130 Moers 2 (DE); KARBACH, Bernhard, D-5042 Erfstadt-Friesheim (DE); KAUTH, Gerd, D-5000 Köln 60 (DE); PRAUSE, Reinhard, D-5205 St. Augustin (DE); PATZKE, Ottokar, D-5042 Erfstadt-Liblar (DE)
(74) Vertreter: Meissner, Peter E., Dipl.-Ing.
(86) Internationale Anmeldenummer: DE9100658
(87) Internationale Veröffentlichungsnummer: WO9203725

(56) Entgegenhaltungen:
- DE-A- 2 740 106
- DE-A- 2 840 456
- FR-A- 2 103 940
- US-A- 3 868 847
- US-A- 4 899 590
- US-A- 4 907 455

## Beschreibung

Die Erfindung betrifft eine US-Prüfvorrichtung zur zerstörungsfreien Prüfung nach der Impuls-Echo-Methode eines relativ dazu sich bewegenden Werkstückes.

DE-OS 27 40 106 offenbart eine US-Prüfvorrichtung zur zerstörungsfreien Prüfung metallischer Gegenstände mit einem Prüfkopfträger, an dem drei Prüfköpfe angeordnet sind, deren Schallstrahlachsen sich auf der Innenseite des Werkstückes in einem Punkt schneiden, und die zur Ankoppelung an die Werkstücksoberfläche mit Flüssigkeitskopplersystemen ausgestattet sind. Die Prüfköpfe sind in einem Abstand zueinander am Trägerrahmen einstellbar befestigt und jedem Prüfkopf ist separat eine einen Kanal bildende Vorlaufstrecke zugeordnet. Die zwei außenliegenden Prüfköpfe arbeiten nach dem Impuls-Echo-System, wobei ein Prüfkopf die Funktion des Senders und der andere die Funktion des Empfängers übernimmt. Da die Intensität des empfangenen Signals sehr stark von der Oberflächengeometrie abhängig ist, soll durch den dritten zwischen den beiden außenliegenden Prüfköpfen angeordneten Prüfkopf mittels einer Schallschwächungsmessung die Ausrichtung der beiden außenliegenden Prüfköpfe entsprechend der Oberflächengeometrie des zu prüfenden Werkstückes erfolgen.

Aus der DE-OS 27 51 810 ist eine US-Prüfvorrichtung zum zerstörungsfreien Prüfen von Schweißnähten bekannt, bei der in einer Prüfspinne insgesamt 6 Prüfköpfe angeordnet sind, deren Schallstrahlen sich in einem Punkt schneiden. Die schallübertragende Ankoppelung erfolgt durch Zuführen von Wasser in die Berührungsebene. Nachteilig bei dieser Anordung ist, daß das Koppelmedium in unkontrollierter Weise der Prüfvorrichtung zugeführt wird und dementsprechend der Aufwand für die Ankoppelkontrolle sehr hoch ist. Außerdem ist wegen des taktweisen Abfragens der einzelnen Prüfköpfe die Prüfleistung sehr niedrig, da immer erst das Echo des eingegebenen Schallimpulses abgewartet werden muß, bevor der nächste Schallimpuls eingeschossen werden kann. Ein weiterer wesentlicher Nachteil besteht darin, daß die Prüfköpfe in Einzel-Halterungen eingebaut sind, die bei Toleranzen des Prüfteiles oder bei Transport- und Führungstoleranzen ihre Position zueinander verändern.

Aufgabe der Erfindung ist es, eine verbesserte US-Prüfvorrichtung anzugeben, mit der weitgehend störunanfällig mit hoher Prüfleistung geprüft werden kann. Eine weitergehende Aufgabe besteht darin, die US-Prüfvorrichtung so auszubilden, daß sie einfach und schnell an unterschiedliche Prüfaufgaben und Formen sowie Schalleigenschaften des Prüflings anpaßbar und insbesondere für die Rohrprüfung geeignet ist.
Diese Aufgabe wird mit einer Prüfvorrichtung mit den in Anspruch 1 angegebenen Merkmalen gelöst. Vorteilhafte Weiterbildungen zur Lösung der weitergehenden Aufgabe ergeben sich aus den Unteransprüchen.

Erfindungswesentlich ist, daß der zentrale, das Fließmedium führende Kanal der Kammer in mehrere separate Kanäle aufgeteilt ist, wobei die Anzahl der Kanäle der Anzahl der angeordneten Prüfköpfe entspricht und die Achsen der Kanäle mit der jeweiligen Schallstrahlachse des Prüfkopfes fluchten. Durch die Bildung einer über eine bestimmte Länge der Kammer sich erstreckenden, das Fließmedium führenden separaten Vorlaufstrecke in Form eines Kanals für jeden Prüfkopf wird die Entstehung vagabundierender Schallimpulse weitgehend unterdrückt. Damit kann das verwertbare Signal-Rauschverhältnis wesentlich gesteigert und insgesamt mit höherer Pulsfolgefrequenz gearbeitet werden. Weiterhin werden durch die separaten Vorlaufstrecken die Ankoppelverhältnisse verbessert, da das Koppelmedium besser geführt wird. Zur Erhöhung der schnellen und einfachen Anpassung an unterschiedliche Prüfaufgaben wird die Kammer als Buchse ausgebildet, in der ein mit den das Fließmedium führenden Kanälen versehener Einsatz angeordnet ist. Dies ermöglicht die vorherige Herstellung verschiedener Einsätze, die dann bezüglich des Querschnites und der Neigung ihrer Kanäle den unterschiedlichen Prüfaufgaben angepaßt sind. Als besonders günstig hat sich erwiesen, wenn der Einsatz aus Teflon hergestellt wird. Dieser Werkstoff ist hinsichtlich seiner Schalleigenschaften ähnlich dem von Wasser, so daß im Kanal störende Überkopplungen vermieden werden.

Die Anzahl und Anordnung der Prüfköpfe ist im Prüfkopfträger innerhalb gewisser Grenzen frei wählbar. Die eine Grenze ist dadurch gegeben, daß man aus Gründen der Handhabbarkeit bestrebt ist, den Prüfkopfträger so klein wie möglich zu machen, damit er beispielsweise bei einer Prüfung von Rohren oder Stäben auch als Rotationskopf Verwendung finden kann. Die andere Grenze ergibt sich aus den geometrischen Gegebenheiten der gewählten Schwingergröße und den physikalischen Charakteristiken wie Frequenz und Nahfeldlänge.

In einer ersten einfachen Ausführungsform werden mindestens zwei Prüfköpfe angeordnet. Diese Ausführungsform entspricht im Prinzip zwei getrennt arbeitenden Prüfköpfen, nur mit dem Unterschied, daß die Schallstrahlen sich im Bereich des Werkstückes in einem Punkt schneiden. Der Vorteil besteht darin, daß alle erhältlichen Informationen von ein und demselben Ort stammen und keine Aufwendungen elektronischer Art notwendig sind, um die empfangenen Signale der einzelnen Prüfköpfe ortsgetreu miteinander verknüpfen zu müssen.

Um die internationalen Prüfbedingungen erfüllen zu können, ist es erforderlich, auch in der entgegengesetzten Einschallrichtung zu prüfen, um sicherzustellen, einen mit seiner Reflexionsfläche ungünstig zur ursprünglichen Einschallrichtung liegenden Fehler ebenfalls aufzuspüren. Dies kann man in einfacher Weise dadurch realisieren, daß man unmittelbar neben einem ersten Prüfkopfträger die Anordnung eines weiteren Prüfkopfträgers vorsieht. Bei diesem wäre die Einschallrichtung der angeordneten Prüfköpfe entgegengesetzt zu der des ersten Prüfkopfträgers. Mit einer solchen Anordnung könnten alle bekannten Prüfanforderungen erfüllt werden und ein Parallelbetrieb aller Prüfköpfe wäre möglich. Nachteilig dabei ist, daß der apparative Aufwand relativ groß ist, da zwei getrennte Prüfkopfträger genau einjustiert und gehalten werden müssen und die zwei sich bildenden Prüforte weit auseinanderliegen, was wiederum einen elektronischen Korrelationsaufwand erforderlich macht.

Aus diesem Grunde wird vorgeschlagen, in einem Prüfkopfträger vorzugsweise insgesamt neun Prüfköpfe anzuordnen. Mit Ausnahme des zentral angeordneten Prüfkopfes sind die übrigen 8 Prüfköpfe mit einem Versatz von je 45 Grad kreisförmig bzw. sternförmig um den zentralen Prüfkopf angeordnet. Bei dieser Anordnung werden beispielsweise die Prüfköpfe aufgeteilt in ein Prüfkopfpaar für die Längs- und eines für die Querfehlerprüfung sowie zwei Prüfkopfpaare für die Schrägfehlerprüfung. Der zentral angeordnete Prüfkopf wird vorzugsweise für die Wanddicken- und Dopplungsprüfung verwendet. Er dient gleichzeitig auch als Ankoppelkontrolle. Bei dieser Anordnung liegen bei allen Prüfkopfpaaren die zwei zusammenarbeitenden Prüfköpfe genau einander gegenüber. Vorteilhaft dabei ist, daß es für alle Prüfköpfe nur einen gemeinsamen Prüfort gibt, so daß der bisher übliche elektronische Aufwand für die ortsgetreue Zuordnung der anfallenden Signale entfallen kann. Der gemeinsame Prüfort kann dabei wahlweise auf der äußeren Oberfläche des Prüflings oder auf der Rückwand liegen. Die erstgenannte Variante hat den Vorteil, daß die Prüfung in einem weiten Bereich unabhängig von der Abmessung des Prüflings ist. Dieser Bereich wird aber durch die Brechungsverhältnisse des Ultraschalls im Werkstück begrenzt, da ab einer bestimmten Dicke die verwendbare Schallstrahlkeule nicht mehr die Rückwand erreicht. Dann muß der Schallstrahlwinkel geändert werden, um auch Werkstücke mit dickerer Wand prüfen zu können. Es gibt alternativ dazu auch die Möglichkeit den gemeinsamen Prüfort auf die Rückwand zu legen. Dies hat den Nachteil, daß für jede Dicke eine andere Einstellung erforderlich ist. Diese Prüforteinstellung wird man also deshalb immer nur dann anwenden, wenn es sich um die Prüfung von großen Losen der immer gleichen Abmessung handelt. Der Vorteil der letztgenannten Prüforteinstellung ist darin zu sehen, daß auch ungünstig liegende Innenfehler mit hoher Wahrscheinlichkeit sicher detektiert werden. Bei bestimmten Prüfaufgaben kann es auch zweckmäßig sein, den gemeinsamen Prüfort im Erstreckungsbereich der Werkstückdicke, d. h. zwischen äußerer Oberfläche und Rückwand anzuordnen.

Eine genaue Justierung der Schallfeldkeule der Prüfköpfe wird dadurch erleichtert, daß die Prüfköpfe im Prüfkopfträger in Achsrichtung verstellbar befestigt sind. Außerdem ist es möglich, durch entsprechend exzentrische Buchsen, die in den Prüfkopfträger einsetzbar sind, den vorher bestimmten Schielwinkel des Prüfkopfes durch Drehen der Buchse weitgehend auszugleichen. Eine andere Möglichkeit den Schielwinkel auszugleichen besteht darin, indem man das dem Prüfling zugewandte Ende der Buchse kalottenförmig ausbildet. Die Durchtrittsbohrung im Prüfkopfträger für die einzelnen Prüfköpfe wird auf der prüflingsabgewandten Seite ebenfalls kalottenförmig ausgebildet, so daß in Verbindung mit der auf der Öffnung aufsitzenden Buchse ein Kugelgelenk entsteht. Durch unterschiedliches Festziehen des die Buchse fixierenden Haltebleches mittels dreier Schrauben kann der Prüfkopf in einem kleinen Bereich nach allen Seiten gekippt werden, so daß die Schallstrahlachsen genau einjustiert werden können. Mit dieser Methode kann auch der Schallwinkel im kleinen Umfang, d. h. etwa max. 3/4° geändert werden. Diese Art der Winkelverstellung ist aber sehr umständlich, da durch die Kippmöglichkeit der Buchsenauflage die Gefahr besteht, daß gleichzeitig mit der Winkelverstellung auch der gemeinsame Prüfort verschoben wird. Außerdem besteht die Möglichkeit, daß bei zu starker Verstellung die Schallfeldkeule die Wand des wasserführenden Kanales streift und dort Reflexionen auslöst. Die Ursache dafür ist, daß der Drehpunkt der Verstellung in der Ebene der kalottenförmigen Führung und versetzt zum gemeinsamen Prüfort liegt.

Bei Verwendung der erfindungsgemäßen US-Prüfvorrichtung für Prüflinge mit unterschiedlichen Schalleigenschaften ist es nicht ausgeschlossen, daß der einmal fest vorgegebene Schallstrahlwinkel für diesen oder jenen Prüfling nicht optimal ist. Auch die bereits beschriebene geringfügige Verstellbarkeit des Prüfkopfes ändert an dieser Problematik nichts. Zur Lösung des Problems wird deshalb weiterbildend vorgeschlagen, unterhalb des Haltebleches parallel dazu ein Verschiebeblech anzuordnen, daß auf dem Prüfkopfträger verschiebbar angeordnet ist. Im Idealfall müßte sich im Sinne der Aufrechterhaltung des gemeinsamen Prüfortes das Verschiebeblech auf einer Kreisbahn bewegen. Dies würde aber bedeuten, daß das Verschiebeblech und der entsprechende Bereich auf dem Justierkörper kugelförmig ausgebildet sein müßte. Der zur Herstellung solcher Kugelflächen erforderliche Fertigungsaufwand ist aber sehr hoch und dementsprechend auch die Kosten für solch eine Prüfvorrichtung. Einfacher ist es, die entsprechende Fläche auf dem Justierkörper mit gerader Abweichung, die durch die tangentiale statt kreisförmige Verschiebung in bezug auf den gemeinsamen Prüfort entsteht, in einfacher Weise durch die bereits vorher beschriebenen kalottenförmige Ausbildung der den Prüfkopf führenden Buchse auszugleichen. Damit die Winkelverstellung aller auf einem Kreis angeordneter Prüfköpfe möglich ist, sind die dafür vorgesehenen Langlöcher im Verschiebeblech und im Justierkörper radial auf die Mitte des Prüfkopfträgers ausgerichtet. Die mit dieser Verschiebung mögliche Winkelverstellung liegt im Bereich von ± 1,5°. Der Vorteil ist darin zu sehen, daß auch für Extremfälle ein Schallwinkel vorgegeben werden kann, der im Werkstück einen optimalen Einschallwinkel von 45° ergibt.
Im Falle der Verwendung des erfindungsgemäßen Prüfkopfträgers für eine Rohrprüfung ist die Vorrichtung kardanisch in einer Halterung angeordnet, so daß sie in einfacher Weise sich den Krümmungsverhältnissen anpassen kann. Weiterhin sind die bereits bekannten prismatisch ausgebildeten Verschleißsohlen quer zur Achse des Prüflings verschiebbar mit der Prüfvorrichtung verbunden. Dadurch wird die Anpassung der Führungsmechanik an unterschiedliche Durchmesser der zu prüfenden Rohre vereinfacht. Bei einem feststehendem Prüfkopfträger würde sich das Rohr schraubenlinienförmig bewegen, um eine vollständige Überdeckung zu gewährleisten. Alternativ kann sich das Rohr auch ohne Drehung um seine Längsachse bewegen, wenn der Prüfkopfträger um das Rohr rotiert. Die Anordnung von Verschleißsohlen als Führungselement hat den Nachteil, daß im Dauerbetrieb relativ häufig die Sohlen ausgewechselt werden müssen, insbesondere bei warmfertigen Rohren. Aus diesem Grunde wird weiterbildend vorgeschlagen, in die Sohlen eine Quernut einzufräsen und ein Rollenlager fliegend anzuordnen. Die Anordnung wird so gewählt, daß die Achse des Rollenlagers parallel zur Rohrachse liegt und ein Teil der Umfangsfläche des Rollenlagers über der dem Rohr zugewandten Verschleißfläche der Sohle hervorsteht. Damit übernimmt die Sohle nur noch die Funktion eines Haltekörpers für das Rollenlager, da die Sohle selbst nicht mehr auf dem Rohrkörper aufliegt. Da das Rollenlager aus gehärtetem Stahl besteht, hat es eine erhebliche längere Einsatzdauer im Vergleich zu der aus einem Kunststoff gefertigten Sohle. Eine andere Möglichkeit der Führung besteht darin, zwei im festen Abstand zueinander liegende Walzen rechts und links neben der Prüfachse der Vorrichtung anzuordnen. Die Auflagepunkte der Walzen auf dem Rohr und der gemeinsame Prüfort bilden ein Dreieck, dessen Höhe von der Rohrkrümmung abhängig ist. Damit der Wasserspalt im Bereich des Prüfortes gleich bleibt, muß die sich verändernde Höhe bei unterschiedlichen Rohrdurchmessern ausgeglichen werden. Dazu wird zwischen dem Aufnahmeteil für die Walzen und der Halterung am Prüfkopfträger eine auswechselbare Zwischenlage angeordnet, dessen Dicke der Höhenveränderung entspricht.

Alle Führungen, die mit Elementen arbeiten, die im Kontakt sind mit der sich bewegenden Rohroberfläche sind dem Verschleiß unterworfen. Anzustreben wäre deshalb im Idealfall eine kontaktfreie Führung z. B. im Sinne einer schwimmenden Lagerung unter Ausnutzung des Aquaplaning-Effektes. Dazu wird vorgeschlagen, ein sichelförmiges Element anzuordnen, dessen sichelförmige Spitzen im Bereich der Austrittskante der Kammer liegen und die Austrittsöffnung umfassen. Die der Rohroberfläche zugewandte Fläche des Elementes ist entsprechend gekrümmt. Dadurch wird ein enger definierter Spalt zwischen Rohroberfläche und Prüfkopf gebildet und das aus der Kammer ausfließende Wasser durch diesen Spalt gedrückt. Bei entsprechender Rohrrotation und entsprechendem Wasserzufluß schwimmt der Prüfkopf auf und wird kontaktfrei geführt. Voraussetzung dafür ist, daß die Rohroberfläche entsprechend glatt und eben ist wie beispielsweise bei einem gezogenen oder kaltgewalzten Präzisrohr. Eine weitere Voraussetzung wäre, daß kein zu häufiger Abmessungswechsel stattfindet, da für jeden Durchmesser ein entsprechend gekrümmtes sichelförmiges Element erforderlich ist. Im Falle der Prüfung von warmfertigen Rohren wird man auf die zusätzliche Führung durch Rollen oder Walzen nicht verzichten können, da bedingt durch die Unebenheit der Oberfläche der tragende Wasserkeil hin und wieder abreißen kann. Aber auch in diesem Falle ist der Effekt von Vorteil, da durch den unterstützenden Wasserkeil die kontaktierenden Führungselemente entlastet werden und damit deren Einsatzdauer weiter erhöht wird. Der wasserführende Spalt auf der Austrittsseite hat weiterhin den Vorteil, daß besonders in Längsrichtung des Rohres die ansonsten übliche Verwirbelung des austretenden Wassers unterdrückt und damit das Stör- und Nutzverhältnis weiter verbessert wird.

In der Zeichnung wird anhand von Ausführungsbeispielen die erfindungsgemäße Vorrichtung näher erläutert.

Es zeigen:
- Figur 1: in einer Draufsicht die schematische Anordnung zweier Prüfkopfträger I,II mit je einem gemeinsamen Prüfort und den entsprechenden gegenüberliegenden Schalldämpfungsbohrungen
- Figur 2: in einer Draufsicht die schematische Darstellung eines kreisrunden Prüfkopfträgers mit 9 Prüfköpfen
- Figur 3: einen Querschnitt durch ein Ausführungsbeispiel einer Prüfvorrichtung gemäß der in Fig. 2 dargestellten Anordnung
- Figur 4: eine Draufsicht des Prüfkopfträgers von Fig. 3
- Figur 5: wie Fig. 3, jedoch ein anderes Ausführungsbeispiel
- Figur 6: eine Draufsicht von Figur 5
- Figur 7: einen Teilquerschnitt der Vorrichtung im Bereich der Führung entlang der Linie A-A in Figur 8
- Figur 8: eine Unteransicht von Figur 7
- Figur 9: wie Figur 7, jedoch eine andere Ausführungsform der Führung
- Figur 10: eine Unteransicht von Figur 9
- Figur 11: wie Figur 7, jedoch eine andere Ausführungsform
- Figur 12: eine Unteransicht von Figur 10

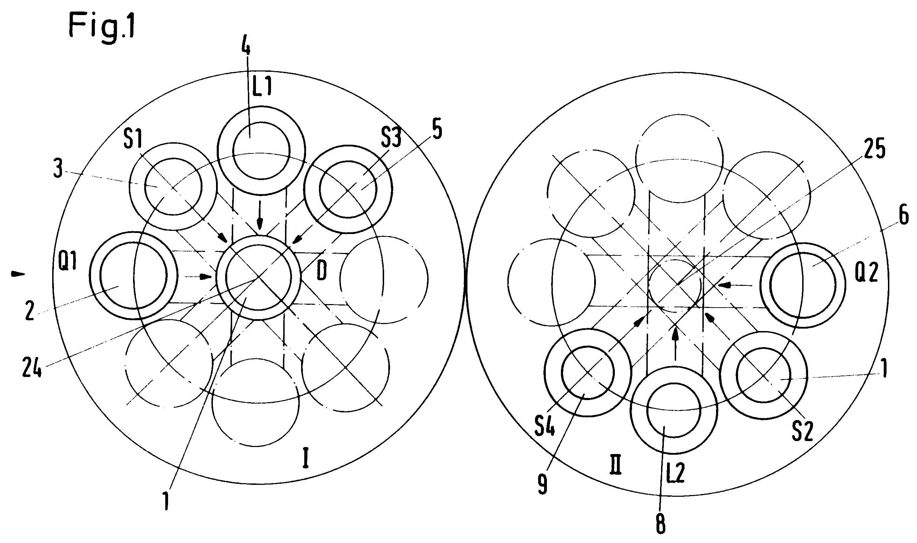

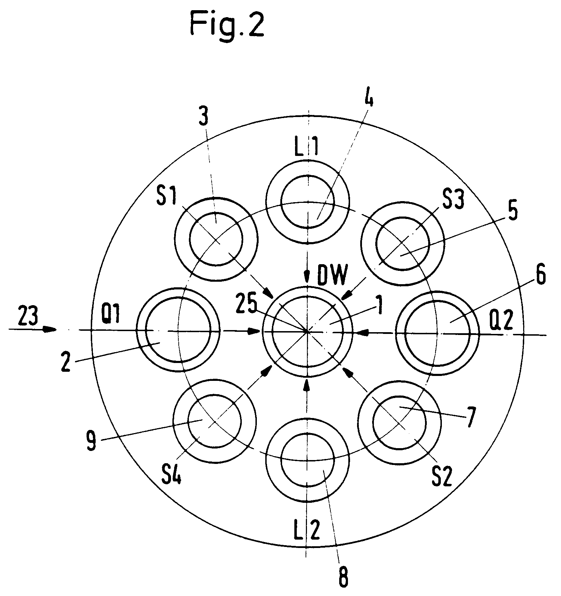

In einer Draufsicht ist in Figur 1 schematisch die Anordnung zweier getrennter Prüfkopfträger I, II dargestellt. Für die Funktion der einzelnen Prüfköpfe 1 bis 9 und ihrer jeweils gegenüberliegenden Schalldämpfungsbohrungen werden für die Figuren 1 + 2 folgende Abkürzungen verwendet.
- DW: = Dopplungsprüfung und Wanddickenprüfung (Senkrechteinschallung)
- Q1,Q2: = Querfehlerprüfung
- L1,L2: = Längsfehlerprüfung
- S1-S4: = Schrägfehlerprüfung

Mit dem dick eingezeichneten Pfeil 23 soll die Einlaufrichtung des hier nicht dargestellten Werkstückes gekennzeichnet werden. In einer ersten einfachen Ausführung ist nur ein Prüfkopfträger vorgesehen, der insgesamt drei Prüfköpfe 1,2,4 oder sogar nur zwei Prüfköpfe 2,4 mit den dazugehörigen Schalldämpfungsbohrungen aufweist. Damit könnte in nur einer Einschallrichtung das Werkstück beispielsweise in bezug auf Längs- und Querfehler und bei Hinzunahme des zentral angeordneten Prüfkopfes 1 auf Wanddicke und Dopplung geprüft werden. Außerdem könnte dieser Prüfkopf 1 zusätzlich die Funktion der Ankoppelkontrolle übernehmen. Bei einer erweiterten Ausführung würde mindestens noch ein Prüfkopf für die Schrägfehlerprüfung hinzukommen. Im Falle der Anordnung zwei weiterer Prüfköpfe 3,5 für die Schrägfehlerprüfung würde dies dem in Figur 1 dargestellten Prüfkopfträger I entsprechen. Charakteristisch für diesen Prüfkopfträger I ist, daß sich die Schallstrahlen (hier symbolisiert durch die von den Prüfköpfen ausgehenden Pfeilen) in nur einem Punkt 24 (Prüfort) schneiden und mit Ausnahme des zentral angeordneten Prüfkopfes 1 für die Dopplungs- und Wanddickenprüfung die übrigen vier Prüfköpfe 2 - 5 auf einem Kreis im Abstand zum zentralen Prüfkopf 1 angeordnet sind. Da die Schallstrahlen der Prüfköpfe 2 bis 5 mit Schrägeinschallung sich nicht gegenseitig beeinflussen und durch dem jeden Prüfkopf 2,3,4,5 gegenüberliegenden Schalldämpfungskanal eine Eigenstörung verhindert wird, ist ein Parallelbetrieb möglich. Die Verwendung eines solchen Prüfkopfträgers I ist aber nur dann möglich, falls die zu beachtende Prüfvorschrift dem nicht entgegensteht und die Lage und der Typ des am häufigsten vorkommenden Fehlers ziemlich genau bekannt ist.

Die international bekannten Prüfvorschriften schreiben zur sicheren Detektierung von Werkstückfehlern eine Einschallrichtung in zwei entgegengesetzten Richtungen vor. Diese Anforderung kann man in der Weise erfüllen, daß der erstgenannte Prüfkopfträger I um 180 Grad gedreht wird und das Werkstück noch einmal diesen Prüfkopfträger I durchlaufen müßte. Etwas eleganter läßt sich dieses Problem dadurch lösen, daß man unmittelbar neben dem ersten Prüfkopfträger I einen weiteren Prüfkopfträger II anordnet, der eine vergleichbare Anordnung von Prüfköpfen 6-9 aufweist. Der Unterschied zum ersten Prüfkopfträger I besteht darin, daß die Einschallrichtungen der Prüfköpfe entgegengesetzt liegen. Die Schallstrahlen der Prüfköpfe 6 - 9 des zweiten Prüfkopfträgers II sind vergleichbar wie die des ersten Prüfkopfträgers I gebündelt ausgerichtet, so daß ebenfalls ein gemeinsamer Schnittpunkt 25 (Prüfort) gebildet wird, dessen Entfernung zum erstgenannten Schnittpunkt 24 des ersten Prüfkopfträgers I mindestens eine Durchmesserlänge des Prüfkopfträgers beträgt.

Vorteilhaft bei dieser Ausführung ist, daß die Prüfköpfe 1 - 5 bzw. 6 - 9 jedes Prüfkopfträgers I,II parallel betrieben werden können, da die Schallstrahlen sich nicht gegenseitig stören. Nachteilig ist der Aufwand der erforderlichen Mechanik, um die zwei Prüfkopfträger I,II zu halten und auf eine gemeinsame Achse einjustieren zu können. Ebenso von Nachteil sind die zwei weit auseinanderliegenden Schnittpunkte 24,25 der Schallstrahlen, die eine entsprechende ortsgetreue Korrelation der erhaltenen Signale erforderlich macht.

Aufgrund dieser Nachteile wird die in Figur 2 gezeigte Ausführungsform vorgeschlagen, bei der in einem einzigen Prüfkopfträger insgesamt 9 Prüfköpfe 1 - 9 angeordnet sind. Die Schallstrahlen aller Prüfköpfe 1-9 sind so ausgerichtet, daß nur ein einziger Schnittpunkt 26 (Prüfort) gebildet wird, der wahlweise sich auf der äußeren Oberfläche oder auf der Rückwand des zu prüfenden Werkstückes befindet. Bei dieser dargestellten Anordnung werden Paare von Prüfköpfen gebildet, die bei gleicher Prüffunktion einander gegenüberliegen und deren Schallstrahlen entgegengesetzt gerichtet sind. Beispielsweise bilden die Prüfköpfe 4,8 ein Prüfkopfpaar für die Längsfehlerprüfung, wobei in Einlaufrichtung 23 gesehen der rechtsliegende Prüfkopf 8 entgegen dem Uhrzeigersinn und der linksliegende Prüfkopf 4 im Uhrzeigersinn einschallt. Vorteilhaft bei dieser Anordnung ist die Möglichkeit, den Prüfkopfträger kompakt zu bauen, so daß für den Halterahmen und für die Führung nur wenig Platz beansprucht wird. Außerdem kann er in dieser kompakten Form auch als Rotationsprüfkopf verwendet werden. Es wird nur ein gemeinsamer Schnittpunkt 26 (Prüfort) gebildet, so daß alle Informationen von ein und derselben Stelle stammen und keine ortsgetreue Korrelation erforderlich ist. Von Nachteil ist, daß eine störende Beeinflussung der Schallstrahlen der einander gegenüberliegenden Prüfköpfe sich nicht vermeiden läßt, so daß ein Parallelbetrieb aller Prüfköpfe im Regelfall nicht möglich ist. Diesem Problem kann man durch die Anwendung des Multiplex-Verfahrens abhelfen, wobei aber im Hinblick auf die Prüfleistung die angestrebte hohe Pulsfolgefrequenz entsprechend verringert werden muß.

Zur Darstellung der Prüfkopfträger in den Figuren 1 + 2 muß nachdrücklich darauf hingewiesen werden, daß die gewählte Anordnung der Prüfköpfe und deren Zuordnung zu einer bestimmten Prüffunktion nur Beispiele sind. Es ist eine Vielzahl anderer Kombinationen möglich ohne den Schutzbereich der Erfindung zu verlassen.

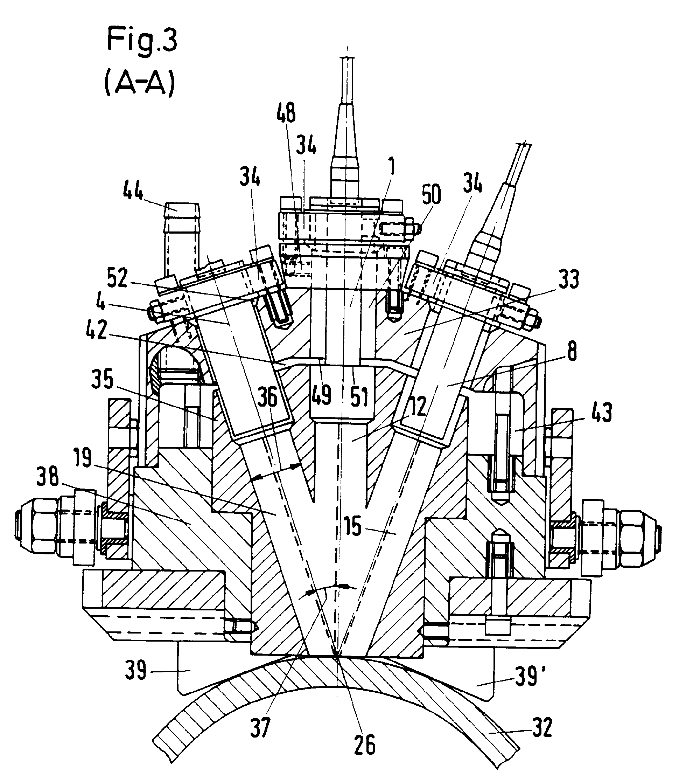

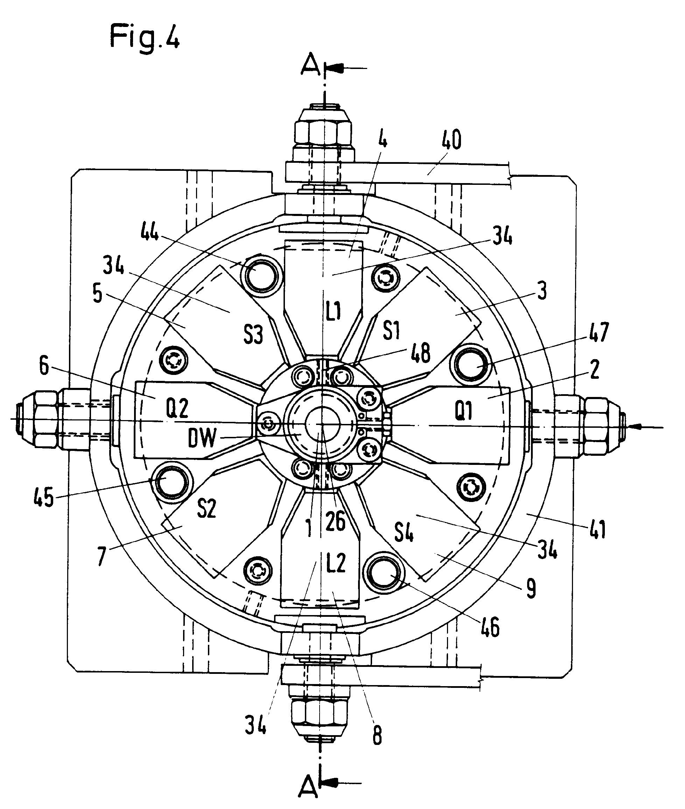

Figur 3 zeigt in einem Schnitt und Figur 4 in einer Draufsicht die erfindungsgemäße Prüfvorrichtung gemäß der in Figur 2 schematisch dargestellten Anordnung. Beispielhaft wird hier ein Rohr 32 in 12-Uhr-Lage geprüft. Durch Drehen des Zeichenblattes kann man auch die Prüfung z. B. in 3- oder 6- oder 9-Uhr-Lage simulieren. Die Prüfvorrichtung besteht aus einem Prüfkopfträger 33, in dem in der schematisch dargestellten Anordung gemäß Fig. 2 insgesamt 9 Prüfköpfe 1 - 9 angeordnet sind. Diese Prüfköpfe 1 - 9 sind über Haltebleche 34 derart im Prüfkopfträger 33 befestigt, daß sie axial unterschiedlich tief fixiert werden können. Außerdem kann in gewissen Grenzen die Achsrichtung der Prüfköpfe 1 - 9 korrigiert werden, so daß die Achsen der Schallstrahlen (hier als gestrichelte Linien angedeutet) genau mit den Achsen (hier als strichpunktierte Linien dargestellt) der Kanäle 12 - 20 fluchten. Dazu ist in einer Bohrung der Haltebleche 34 je eine Buchse 52 eingesetzt und fixiert, deren dem Prüfling 32 zugewandtes Ende kalottenförmig ausgebildet ist. Zusammen mit der entsprechenden kalottenförmigen Ausbildung der dem Prüfling 32 abgewandten Öffnung der Durchtrittsbohrungen im Prüfkopfträger 33 ergibt sich ein kugelartiges Gelenk, das eine Kippbarkeit der Prüfköpfe 1 - 9 nach allen Seiten im Sinne einer Feinjustierung ermöglicht. Insbesondere wird diese Einstellmöglichkeit dazu verwendet, um den Schielwinkel der Prüfköpfe auszugleichen. Erfindungsgemäß ist jedem Prüfkopf 1 - 9 ein das Fließmedium führender Kanal 12 - 20 zugeordnet, wobei in diesem Ausführungsbeispiel die Kanäle 12 - 20 zylindrische Bohrungen sind. Um die Anpassung der Prüfvorrichtung an verschiedene Prüfaufgaben in einfacher Weise realisieren zu können, sind die Kanäle 12 - 20 in einem auswechselbaren Einsatz 35 angeordnet. Damit können sowohl die Querschnittsform, der Durchmesser 36 und die Achsenwinkligkeit 37, die in diesem Beispiel 19 Grad beträgt, variiert werden. Vorteilhafterweise wird dieser Einsatz aus Teflon gefertigt, da dieser Werkstoff ähnliche Schalleigenschaften wie Wasser aufweist. Der Einsatz 35 wird gehalten durch eine Buchse 38, die fest mit dem Prüfkopfträger 33 verbunden ist. An der Unterseite der Buchse 38 ist die Führungsmechanik angeordnet, die im Falle der Rohrprüfung zwei verstellbare prismenartig ausgebildete Sohlen 39,39′ aufweist. Im Hinblick auf eine exakte Justierung der Prüfvorrichtung bei der Prüfung von Werkstücken mit gekrümmter Oberfläche ist der Prüfkopfträger 33 mitsamt des daran befestigten Einsatzes 35 und der Buchse 38 kardanisch in einem Rahmengestell 40,41 aufgehängt.

Für eine störungsfreie Führung des Fließmediums ist der Einsatz 35 zum Prüfkopfträger 33 so angeordnet, daß im Verbindungsbereich ein Spalt 42 gebildet wird. Dieser Spalt 42 ist in diesem Ausführungsbeispiel domartig ausgebildet und erstreckt sich über alle Einlaßöffnungen der Kanäle 12 - 20. Im Randzonenbereich erweitere sich der Spalt 42 zu einem Ringraum 43, den die Anschlußkanäle 44 - 47 für die Zufuhr des Fließmediums münden. Am höchsten Punkt des Spaltes 42 oder allgemeiner ausgedrückt in der größten Entfernung von der Werkstückoberfläche, ist ein Entlüftungskanal 48 angeordnet. Um die Prüfvorrichtung für alle Uhr-Lagen universell verwendbar zu machen, sind im Prüfkopfträger 33 weitere Entlüftungsbohrungen (hier nicht dargestellt) angeordnet, die wahlweise geöffnet oder geschlossen werden können. Um eine Luftblasenansammlung im Bereich der Prüfköpfe 1 - 9 möglichst zu vermeiden, werden die Prüfköpfe 1 - 9 im Prüfkopfträger 33 so befestigt,daß die Stirnfläche der Prüfköpfe 1 - 9, hier beispielsweise die 51 des zentral angeordneten Prüfkopfes 1 über die Austrittsfläche 49 der Bohrung 50 hinausragt, mindestens aber bündig damit abschließt. Bei den beiden anderen hier dargestellten Prüfköpfen 4,8 ragt die Stirnfläche sogar weit in den jeweiligen Kanal 15,19 des Einsatzes 35 hinein.

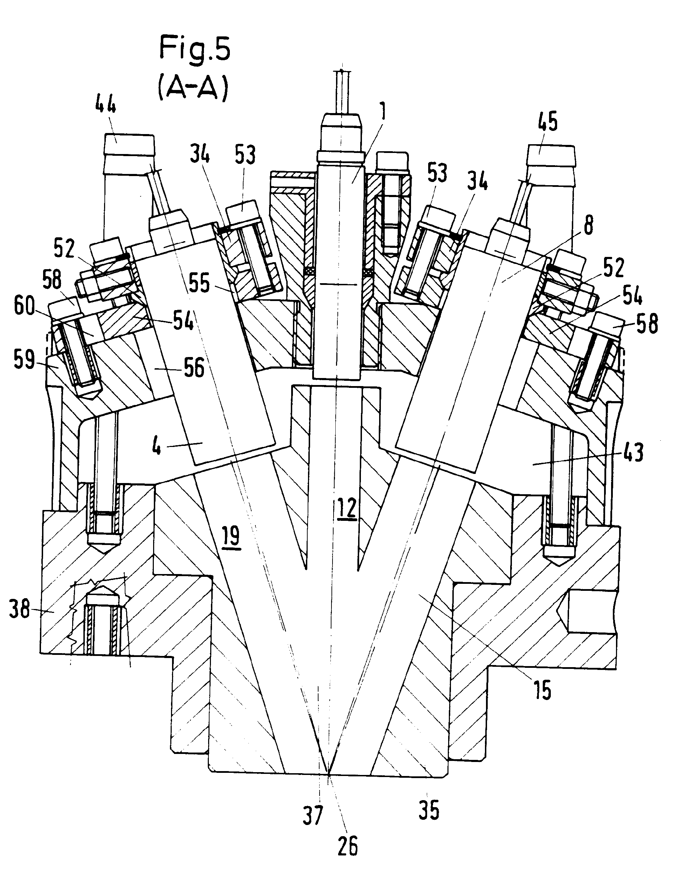

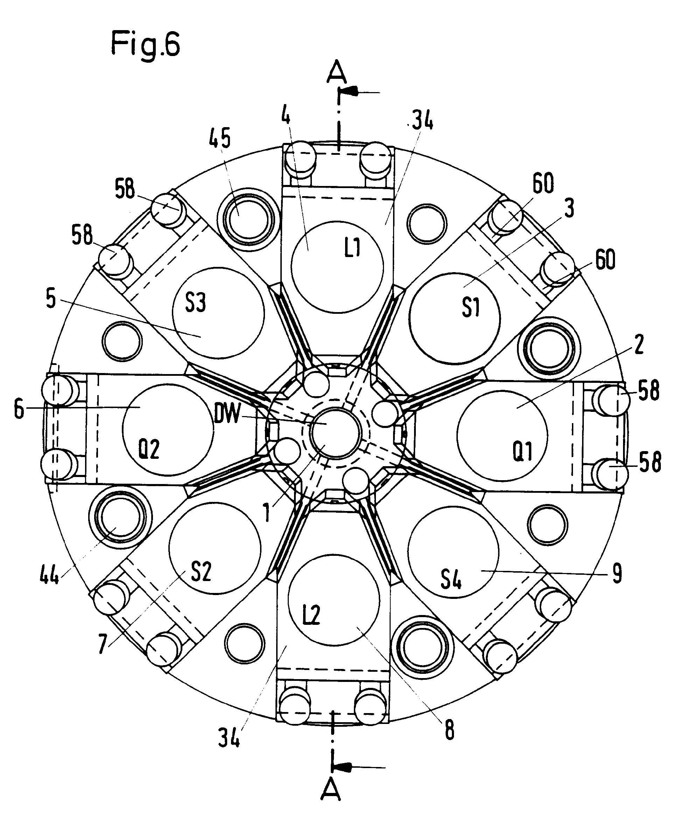

Figur 5 zeigt im gleichen Querschnitt wie Figur 3 und Figur 6 in der gleichen Draufsicht ein anderes Ausführungsbeispiel der erfindungsgemäßen Prüfvorrichtung gemäß der in Figur 2 schematisch dargestellten Anordnung. Aus Vereinfachungsgründen wurden für gleiche Teile die gleichen Bezugszeichen verwendet. Um bei der in Figur 3 dargestellten Prüfvorrichtung den Schallstrahlwinkel in einer größeren Bandbreite, z. B. 16 - 19° kontinuierlich verändern zu können, wird die in dieser Figur 5 dargestellte Ausführung vorgeschlagen. Unterhalb des Haltebleches 34 wird ein verschiebbares Verschiebeblech 54 angeordnet, das über Schrauben 53 mit dem Halteblech 34 fest verbunden ist. Das Verschiebeblech 54 ist seinerseits über Schrauben 58 an einer geradlinig bearbeiteten Fläche 59 des Prüfkopfträgers befestigt. Wie der Darstellung zu entnehmen ist, sind die Befestigungsschrauben 58 des Verschiebebleches 54 in einem Langloch 60 angeordnet, so daß nach Löser der Schrauben 58 eine geradlinige Verschiebung des Verschiebebleches 54 entlang der bearbeiteten Fläche 59 möglich ist. Da der gemeinsame Prüfort 26 aber nicht verändert werden soll, müßte im Idealfall die Verschiebung auf einer Kreisbahn mit dem gemeinsamen Prüfort 26 als Mittelpunkt erfolgen. Dies würde aber eine aufwendige kalottenförmige Bearbeitung des Prüfkopfträgers 33 und des Verschiebebleches 54 bedeuten. Zum Ausgleich der sich durch die geradlinige Verschiebung einstellenden Abweichung wird auf das in Figur 3 beschriebene Justiersystem zurückgegriffen. Im Halteblech 34 ist die bereits beschriebene Buchse 52 angeordnet, deren dem Prüfling zugewandtes Ende kalottenförmig ausgebildet ist. Durch unterschiedliches Festziehen der Schrauben 53 kann die sich einstellende Abweichung wieder ausgeglichen werden, so daß auch bei relativ großer Veränderung des Schallstrahlwinkels der gemeinsame Prüfort 26 erhalten bleibt. Damit eine Verstellung aller auf einer Kreisbahn angeordneten Prüfköpfe 2-8 möglich ist, sind die Langlöcher 60 des Verschiebebleches 54 und die Langlöcher 56 für die Prüfköpfe 2-8 radial auf die Mitte des Prüfkopfträgers 33 ausgerichtet.

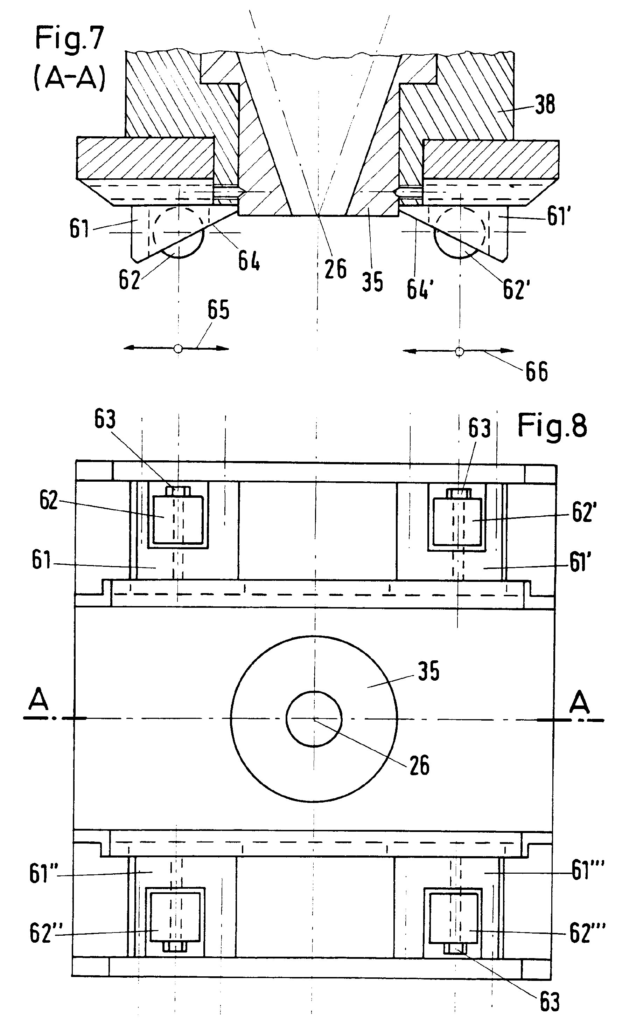

Figur 7 zeigt im Teilquerschnitt entlang der Linie A-A der Figur 8 den unteren Bereich der Führung der bereits beschriebenen Prüfvorrichtung. Das zu prüfende Rohr 32 (siehe Figur 3) ist hier der besseren Übersichtlichkeit wegen weggelassen worden, bewegt sich aber in der gleichen Weise wie bereits in Figur 3 beschrieben. Im Unterschied zu Figur 3 sind in die Verschleißsohlen 61,61′,61˝,61‴ Nuten eingefräst, in denen ein Rollenlager 62,62′,62˝,62‴ fliegend angeordnet ist. Die Befestigung des Rollenlagers 62,62′,62˝,62‴ erfolgt mittels einer Schraube 63. Die Abmessung der Nut sowie des Rollenlagers 62,62′,62˝,62‴ werden so aufeinander abgestimmt, daß ein Teil des äußeren Umfanges des Rollenlagers 62,62′,62˝,62‴ gegenüber der dem hier nicht gezeigten Rohr 32 zugewandten Fläche 64,64′ der Sohle 61,61′,61˝,61‴ hervorsteht. Damit wird sichergestellt, daß nur noch die Mantelfläche des Rollenlagers 62 - 62‴ im Kontakt mit der Mantelfläche des Rohres 32 ist. Da das Rollenlager 62 - 62‴ üblicherweise aus gehärtetem Stahl gefertigt wird, hat es eine erheblich höhere Einsatzdauer als die aus Kunststoff gefertigte Sohle 61 - 61‴ und braucht demnach nicht so häufig ausgewechselt werden. Die unterhalb der Figur 7 eingezeichneten Pfeile 65,66 sollen andeuten, daß die Sohlen 61 - 61‴ mitsamt den Rollenlagern 62 - 62‴ verschiebbar sind, um bei Abmessungswechsel der zu prüfenden Rohre 32 den unterschiedlichen Krümmungsradius ausgleichen zu können. Damit wird sichergestellt, daß der in Figur 3 dargestellte einzuhaltende Abstand zwischen Scheitellinie des Rohres 32 und Austrittspunkt 26 des auswechselbaren Einsatzes 35 unverändert bleibt.

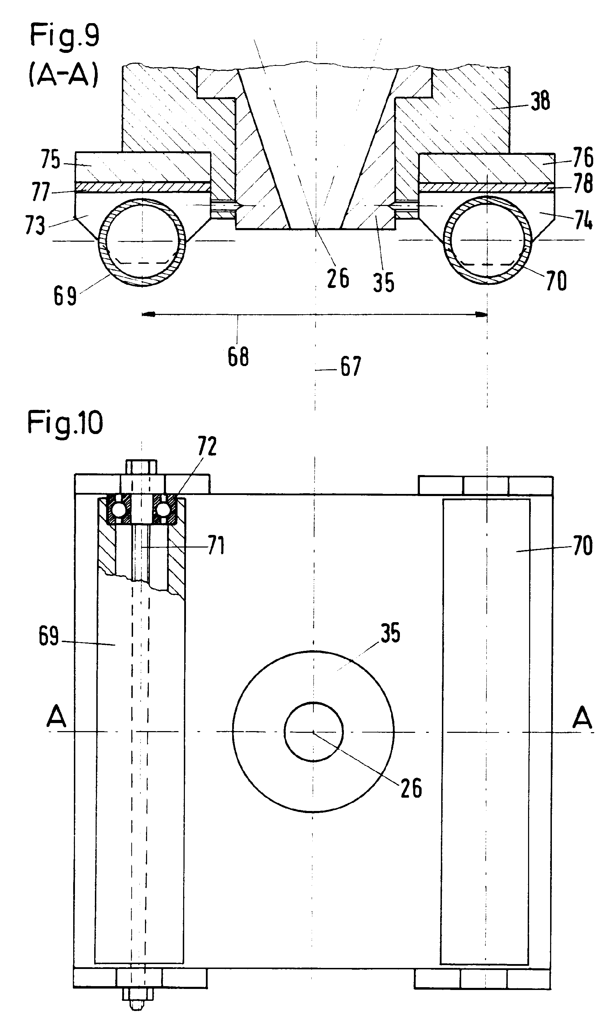

In den Figuren 9 und 10 ist in der gleichen Weise wie in den Figuren 7 und 8 eine andere Ausführungsform der Führung der Prüfvorrichtung dargestellt. Rechts und links neben der Prüfachse 67 sind im festen Abstand 68 zueinander statt der Rollen zwei drehbar gelagerte Walzen 69,70 angeordnet. Durch die hohle Walze 69,70 ist eine Stange 71 geführt, auf deren Ende je ein Wälzlager 72 angeordnet ist. Der Außenring des Lagers 72 stützt sich in einer Ausnehmung der Walze 69 ab. Die Auflagepunkte der Walzen 69,70 auf dem hier nicht dargestellten Pohr 32 (siehe Figur 3) bilden zusammen mit dem Prüfort 26 ein Dreieck. Die Höhe dieses Dreiecks ist abhängig von Rohrdurchmesser bzw. von der Krümmung der Mantelfläche. Damit bei einem Abmessungswechsel der Abstand zwischen Scheitellinie des zu prüfenden Rohres und Prüfort 26 gleich bleibt ist zwischen dem Aufnahmeteil 73,74 für die Walzen 69,70 und der Halterung 75,76 ein auswechselbares Zwischenteil 77,78 angeordnet. Damit kann in einfacher Weise die sich ergebende Höhendifferenz ausgeglichen werden.

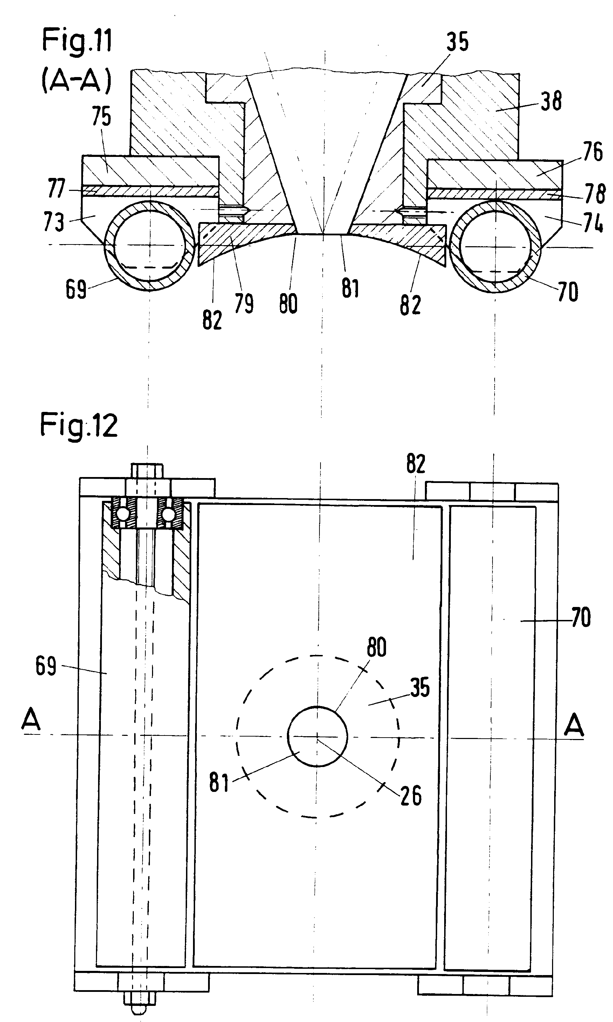

Eine weitere Ausführungsform ist in den Figuren 11 und 12 dargestellt. Um im Idealfall eine kontaktfreie Führung zu erreichen, wird unterhalb des auswechselbaren Einsatzes 35 ein sichelförmiges Element 79 angeordnet. Die Spitzen dieses Elementes 79 schließen bündig mit der Austrittskante 80 des auswechselbaren Einsatzes 35 ab und umfassen die Austrittsöffnung 81. Der anschließende Bereich des auswechselbaren Einsatzes 35 sowie der Buchse 38 sind durch das Element 79 abgedeckt. Die dem zu prüfenden Rohr 32 (siehe Figur 3) zugewandte Fläche 82 des Elementes ist entsprechend wie das Rohr gekrümmt. Dadurch entsteht zwischen Rohraußenoberfläche und Element 79 ein enger definierter Spalt, in dem das aus dem Einsatz 35 austretende Wasser nach den Seiten sowie in axialer Richtung hingeführt wird. Die ansonsten übliche Verwirbelung des austretenden Wassers im Kantenbereich der Einsatzes 35 wird durch diese Maßnahme unterdrückt. In dem engen Spalt wird bei entsprechender Rotation des zu prüfenden Rohres 32 und einer entsprechenden abfließenden Wassermenge ein Wasserkeil gebildet, so daß bei entsprechender Rohroberfläche die Prüfvorrichtung aufschwimmt und kontaktfrei geführt wird. Bei diesem Vorgang wird der Effekt des Aquaplaning ausgenützt. Bei der Prüfung von warmfertigen Rohren ist dies nicht reproduzierbar gewährleistet, da bedingt durch die rauhe Oberfläche und die sonstigen Unebenheiten der Wasserkeil plötzlich zusammenbrechen kann. In diesem Fall ist eine weitere Abstützung erforderlich, z. B. durch Walzen 69,70 wie in der Figur 11 dargestellt. Alternativ können es auch Rollen oder übliche Verschleißsohlen sein. In jedem Falle werden auch bei Prüfungen von warmfertigen Rohren die Führungen durch den sich bildenden Wasserkeil entlastet, so daß deren Einsatzdauer erhöht wird.

## Patentansprüche

1. US-Prüfvorrichtung zur zerstörungsfreien Prüfung nach der Impuls-Echo-Methode eines relativ dazu sich bewegenden Werkstückes mit Ankoppelung mittels eines Fließmediums zwischen dem Ultraschallschwinger und der Werkstückoberfläche bestehend aus einem Prüfkopfträger, an dem mindestens zwei Prüfköpfe angeordnet sind, deren Schallstrahlachsen sich im Bereich des Werkstückes in einem Punkt schneiden und einer für alle Prüfköpfe gemeinsamen das Fließmedium führenden die Vorlaufstrecke bildenden Kammer, die eine der Werkstückoberfläche zugewandte Austritsöffnung aufweist und mit dem Prüfkopfträger verbunden ist sowie einem der Kontur des Werkstückes entsprechend ausgebildeten und mit dem Prüfkopfträger verbundenen Führungselement, bei der
jedem Prüfkopf (1-9) eine über eine bestimmte Länge der gemeinsamen Kammer sich erstreckende, einen Kanal (12-20)bildende separat geführte Vorlaufstrecke zugeordnet ist, deren Achse mit der jeweiligen Schallstrahlachse fluchtet.

2. US-Prüfvorrichtung nach Anspruch 1, bei der
unmittelbar neben einem ersten Prüfkopfträger (I) die Anordnung eines weiteren Prüfkopfträgers (II) vorgesehen ist, wobei die Einschallrichtungen der Schallstrahlen der Prüfköpfe (6-9) des zweiten Prüfkopfträgers (II) in bezug auf das Werkstück (10) genau entgegengesetzt denen des ersten Prüfkopfträgers (I) liegen.

3. US-Prüfvorrichtung nach Anspruch 1, bei der
im Prüfkopfträger (33) insgesamt neun Prüfköpfe (1-9) angeordnet sind mit einem zentral angeordneten Prüfkopf (1) und im Abstand dazu symmetrisch auf einem Kreis verteilt acht weitere Prüfköpfe (2-9) mit einem Versatz von 45°, wobei der zentral angeordnete Prüfkopf (1) vorzugsweise für die Wanddicken- und Dopplungsprüfung vorgesehen ist.

4. US-Prüfvorrichtung nach den Ansprüchen 1 - 3, bei der
im Falle einer Rohrprüfung der Prüfkopfträger (33) kardanisch in einer Halterung (40,41) angeordnet ist und das Führungselement mindestens zwei prismenartig ausgebildete Verschleißsohlen (39,39˝) aufweist, die im gleichen Abstand rechts und links neben der Prüfachse (67) der Vorrichtung angeordnet und quer zur Achse des Rohres (32) verstellbar (65,66) sind.

5. US-Prüfvorrichtung nach Anspruch 4, bei der
ein Rollenlager (62-62‴) in je einer Verschleißsohle (61-61‴) so angeordnet ist, daß die Achse des Rollenlagers (62-62‴) parallel zur Achse des Rohres (32) liegt und ein Teil des äußeren Umfangs über der dem Rohr (32) zugewandten Verschleißfläche (64,64′) der Sohle (61-61‴) hervorsteht.

6. US-Prüfvorrichtung nach den Ansprüchen 1 - 3, bei der
im Falle einer Rohrprüfung der Prüfkopfträger (33) kardanisch in einer Halterung (40,41) angeordnet ist und das Führungselement zwei in einem Aufnahmeteil (73,74) drehbar gelagerte Walzen (69,70) aufweist, die in einem festgelegten Abstand (68) zueinander rechts und links neben der Prüfachse (67) der Vorrichtung befestigt sind und deren Achsen parallel zur Achse des Rohres (32) liegen und das Rohr (32) sich schraubenlinienförmig entlang des ortsfest angeordneten Prüfkopfträgers bewegt.

7. US-Prüfvorrichtung nach Anspruch 6, bei der
zwischen dem Aufnahmeteil (73,74) und einer Halterung (75,76) eine auswechselbare Zwischenlage (77,78) angeordnet ist.

8. US-Prüfvorrichtung nach den Ansprüchen 1 - 3,
**dadurch gekennzeichnet**,
daß im Falle einer Rohrprüfung der Prüfkopfträger (33) kardanisch in einer Halterung (40,41) angeordnet ist und das Führungselement aus einem im Querschnitt sichelförmig ausgebildeten Element (79) besteht und die Sichelspitzen sich im Bereich der Austrittskante (80) eines auswechselbaren Einsatzes (35) befinden und die Austrittsöffnung (81) des auswechselbaren Einsatzes (35) umfassen und die dem Rohr (32) zugewandte Fläche (82) entsprechend der Mantelfläche des Rohres (32) gekrümmt ist und der an die Austrittsöffnung (81) sich anschließende Bereich des auswechselbaren Einsatzes (35) und der Buchse (38) durch das im Querschnitt sichelförmig Element (79) abgedeckt sind und das Rohr (32) sich schraubenlinienförmig entlang des ortsfest angeordneten Prüfkopfträgers (33) bewegt.

9. US-Prüfvorrichtung nach Anspruch 8, bei der
das Führungselement zusätzlich rechts und links neben dem sichelförmig ausgebildeten Element (79) angeordnete Rollen (62-62‴) oder Walzen (67) aufweist.

10. US-Prüfvorrichtung nach einem der vorhergehenden Ansprüche, bei der
der Prüfkopf (1-9) in einer Buchse (52) geführt ist, die in der Bohrung eines Haltebleches (34) eingesetzt und fixiert ist und deren dem Prüfling (32) zugewandtes Ende kalottenförmig ausgebildet ist.

11. US-Prüfvorrichtung nach Anspruch 10, bei der
das Halteblech (34) mit einem parallel darunterliegenden Verschiebeblech (54) verbunden ist, das auf dem Prüfkopfträger (33) verschiebbar angeordnet ist und eine für den Durchtritt des Prüfkopfes (2-8) geeignete Bohrung (55) aufweist, deren dem Halteblech (34) zugewandtes Ende kalottenförmig ausgebildet ist und der Prüfkopfträger (33) und das Verschiebeblech (54) entsprechend dem vorgegebenen Verstellweg passend ausgearbeitete Langlöcher (56,60) aufweisen, die radial zum Mittelpunkt des Prüfkopfträgers (33) ausgerichtet sind.

## Claims

1. Ultrasonic testing equipment for non-destructive testing, in accordance with the pulse-echo technique, of a workpiece which moves in relation to this said equipment, with coupling by means of a liquid between the ultrasonic vibrator and the surface of a workpiece, comprising a sensor on which at least two sensors, the axes of the sonic beams of which intersect at a point in the area of a said given workpiece, are disposed, and a chamber which is common to all sensors and which guides the said liquid and forms a delay-line and which has an outlet facing the surface of a said given workpiece and which is connected to the sensor carrier, and also a guiding element which is connected to the sensor carrier and which is developed according to the external form of a said given workpiece, in which each sensor (1-9) is associated with a delay-line, the axis of which is aligned with the sonic beam axis concerned, which forms a channel (12-20) and extends over a certain length of the common chamber.

2. Ultrasonic testing equipment in accordance with claim 1, in which arrangement of a further sensor carrier (II) together with the first sensor carrier (I), whereby the direction of transmission of the sonic beam of a sensor (6-9) of a said given second sensor carrier (II) is, in relation to the workpiece, exactly opposite that of a said given first sensor carrier (I).

3. Ultrasonic testing equipment in accordance with claim 1, in which a total of nine sensors (1-9) are disposed in a sensor carrier (33) with a central sensor (1) and eight other sensors (2-9), arranged at a separation distance from a said given central sensor, are symmetrically distributed around a circle with an angular separation of 45° between them, whereby the centrally disposed sensor (1) is preferably provided for testing wall-thickness and for double-precision-testing.

4. Ultrasonic testing equipment in accordance with claims 1 - 3, in which a sensor carrier (33) is, for testing pipes, disposed on gimbals in a mounting support (40, 41) and the guiding element has at least two abrasion shoes (39, 39˝), developed such that they have the form of a prism, which are disposed with the same separation to the left and to the right of an axis of testing (67) and the position of which can be adjusted (65, 66) transversely in relation to the axis of a pipe (32) concerned.

5. Ultrasonic testing equipment in accordance with claim 4, in which a roller bearing (62-62‴) is disposed in an abrasion shoe (61-62‴) such that the axis of the roller bearing (62-62‴) lies parallel to the axis of a said given pipe (32) and a section of the external periphery extends over the abrasion surface (64, 64′), of a said given shoe (61-61‴), which faces a said given pipe (32).

6. Ultrasonic testing equipment in accordance with claims 1 - 3, in which a sensor carrier (33) is, for testing pipes, disposed on gimbals in a mounting support (40, 41) and the guiding element has two cylinders (69, 70) which are support such that they can rotate in a receiving member (73, 74), the said given cylinders being fixed with a set separation (68) in relation to each other to the right and to the left of an axis of testing (67) of the equipment, the axes of the said given cylinders lying parallel to the axis of a pipe (32) and a said given pipe (32) moves helically along the sensor carrier which is stationary.

7. Ultrasonic testing equipment in accordance with claim 6, in which an intermediate layer (7, 78) is disposed between a receiving member (73, 74) and a mounting support member (75, 76).

8. Ultrasonic testing equipment in accordance with claims 1 - 3, in which a sensor carrier (33) is, for testing pipes, disposed on gimbals in a mounting support (40, 41) and the guiding element comprises an element (79) which is developed such that it is sickle-shaped in cross-section and the point of the said sickle-form are positioned in the area of an outlet rim (80) of an exchangeable insert (35) and enclose the outlet (81) of a said given exchangeable insert (35) and a surface facing casing of a pipe (32) is curved and the area of a said given exchangeable insert (35) lying against a said given outlet (81) and sleeve (38) are covered by the said given element (79) and the said given pipe (32) moves helically along the sensor-carrier (33) which is stationary.

9. Ultrasonic testing equipment in accordance with claim 8, in which a guiding member additionally has rollers (62-62‴) or cylinders (67) disposed to the right and to the left of an element (79) which is developed such that it is sickle-shaped.

10. Ultrasonic testing equipment in accordance with any one of the foregoing claims, in which a sensor (1-9) is guided in a sleeve (52) which is inserted into and fixed in a boring of a retaining plate (34) and of which the end facing a testpiece (32) is spherically developed.

11. Ultrasonic testing equipment in accordance with claim 10, in which a retaining plate (34) is connected with a sliding plate (54) which is disposed on a sensor carrier (33) such that it can shift and which lies beneath the said retaining plate which also has a boring (55) suited to passage through it by a sensor (2-8), the end, facing the said retaining plate, of the said boring, being spherically developed, and the the said sensor carrier (33) and the said sliding plate (54) have oblong holes (56, 60) worked in them which correspond to a set line of adjustment and which are radially arranged in relation to the centre of the said sensor carrier (33).

## Revendications

1. Dispositif d'essai par ultrasons pour le test non destructif, selon le procédé impulsion-écho,d'une pièce se déplaçant relativement à celui-ci avec couplage au moyen d'un milieu fluidisé entre l'émetteur d'ultrasons et la surface de la pièce, constitué d'un support de palpeurs, sur lequel sont agencés au moins deux palpeurs, dont les axes des rayonnements sonores se coupent dans la zone de la pièce en un point, et d'une chambre commune pour tous les palpeurs, guidant le milieu fluidisé et formant l'étendue d'avance, qui présente une ouverture de sortie en regard de la surface de la pièce et est reliée au support de palpeurs, ainsi qu'un élément de guidage réalisé de façon correspondant au contour de la pièce et relié au support de palpeurs, dans lequel, à chaque palpeur (1-9), il est associé une étendue d'avance guidée séparément, formant un canal (12-20), et s'étendant sur une longueur déterminée de la chambre commune, dont l'axe est aligné avec l'axe respectif des rayonnements sonores.

2. Dispositif d'essai par ultrasons selon la revendication 1, dans lequel, directement à côté d'un premier support de palpeurs (I), il est prévu l'agencement d'un autre support de palpeurs (II), les directions de balayage sonore des rayonnements sonores des palpeurs (6-9) du second support de palpeurs (II), relativement à la pièce (10), se trouvant précisément opposées à celles du premier support de palpeurs (I).

3. Dispositif d'essai par ultrasons selon la revendication 1, dans lequel, dans le support de palpeurs (33), il est agencé en totalité neuf palpeurs (1-9), comportant un palpeur agencé de façon centrale (1) et, à distance de celui-ci, de façon symétriquement répartie sur un cercle, huit autres palpeurs (2-9) avec un décalage de 45°, le palpeur agencé de façon centrale (1) étant prévu de préférence pour l'essai d'épaisseurs de paroi et de doublements.

4. Dispositif d'essai par ultrasons selon les revendications 1 à 3, dans lequel, dans le cas d'un essai de tube, le support de palpeurs (33) est agencé à la Cardan dans un support (40,41), et l'élément de guidage présente au moins deux soles d'usure réalisées en forme de prisme (39,39˝), qui sont agencées, à même distance, à droite et à gauche, à côté de l'axe d'essai (67) du dispositif et sont réglables (65,66) transversalement à l'axe du tube (32).

5. Dispositif d'essai par ultrasons selon la revendication 4, dans lequel un palier à rouleaux (62-62‴) est agencé dans une sole d'usure respective (61-61‴), de sorte que l'axe du palier à rouleaux (62-62‴) s'étend parallèlement à l'axe du tube (32) et une partie de la périphérie externe fait saillie au-dessus de la surface d'usure (64,64′), en regard du tube (32), de la sole (61-61‴).

6. Dispositif d'essai par ultrasons selon les revendications 1 à 3, dans lequel, dans le cas d'un essai de tube, le support de palpeurs (33) est agencé à la Cardan dans un support (40,41) et l'élément de guidage présente deux rouleaux (69,70) montés rotatifs dans une pièce de réception (73,74), qui sont fixés à une distance déterminée (68) l'un par rapport à l'autre, à droite et à gauche, à côté de l'axe d'essai (67) du dispositif et dont les axes s'étendent parallèlement à l'axe du tube (32), et le tube (32) se déplace de façon hélicoïdale le long du support de palpeurs agencé de façon stationnaire.

7. Dispositif d'essai par ultrasons selon la revendication 6, dans lequel, entre la pièce de réception (73,74) et un support (75,76), il est agencé une couche intermédiaire interchangeable (77,78).

8. Dispositif d'essai par ultrasons selon les revendications 1 à 3,
caractérisé en ce que, dans le cas d'un essai de tube, le support de palpeurs (33) est agencé à la Cardan dans un support (40,41) et l'élément de guidage est constitué d'un élément (79) réalisé en ayant une section transversale en forme de croissant et les pointes du croissant se trouvent dans la zone du bord de sortie (80) d'une pièce interchangeable (35) et entourent l'ouverture de sortie (81) de la pièce interchangeable (35), et la surfacé (82) en regard du tube (32) est cintrée de façon correspondant à la surface d'enveloppe du tube (32), et la zone de la pièce interchangeable (35) se raccordant à l'ouverture de sortie (81) et la douille (38) sont recouvertes par l'élément (79) présentant une section transversale en forme de croissant, et le tube (32) se déplace de façon hélicoïdale le long du support de palpeurs (33) agencé de façon stationnaire.

9. Dispositif d'essai par ultrasons selon la revendication 8, dans lequel l'élément de guidage présente de plus des rouleaux (62-62‴) ou cylindres (67) agencés à droite et à gauche à côté de l'élément (79) réalisé en forme de croissant.

10. Dispositif d'essai par ultrasons selon une des revendications précédentes, dans lequel le palpeur (1-9) est guidé dans une douille (52) qui est montée dans un perçage d'une tôle de maintien (34) et y est fixé, et dont l'extrémité en regard de l'éprouvette (32) présente une forme de calotte.

11. Dispositif d'essai par ultrasons selon la revendication 10, dans lequel la tôle de maintien (34) est reliée à une tôle mobile (54) parallèlement sous-jacente, qui est agencée de façon mobile sur le support de palpeurs (33) et présente un perçage (55) approprié pour le passage du palpeur (2-8), dont l'extrémité en regard de la tôle de maintien (34) présente une forme de calotte, et le support de palpeurs (33) et la tôle mobile (54) présentent des trous oblongs (56,60) usinés en étant adaptés de façon correspondant à la course de réglage prédéfinie, qui sont orientés radialement par rapport au centre du support de palpeurs (33).
